# EUROPÄISCHE PATENTANMELDUNG

(11) **EP 0 788 218 A2**
(43) Veröffentlichungstag der Anmeldung: **06.08.1997**
(21) Anmeldenummer: 97100628.3
(22) Anmeldetag: 16.01.1997
(51) Int. Cl.: H02M 3/28, H02M 11/00, H01L 41/107

(54) **DC-DC-Wandler mit piezoelektrischem Wandler**

(30) Priorität: 01.02.1996 DE 19603634
(71) Anmelder: SIEMENS AKTIENGESELLSCHAFT, 80333 München (DE)
(72) Erfinder: Quast, Roland, Dipl. Ing., 13435 Berlin (DE)

(57) **Zusammenfassung**

Die Erfindung bezieht sich auf einen DC-DC-Wandler zur potentialfreien Energieversorgung einer Ansteuerschaltung eines Leistungshalbleiterschalters einer Stromrichterschaltung aus deren Gleichspannungs-Zwischenkreis. Erfindungsgemäß weist dieser DC-DC-Wandler einen modifizierten Wechselrichter-Brückenzweig (4) auf, der eingangsseitig über einen Eingangsfilter (2) mit dem Gleichspannungs-Zwischenkreis und ausgangsseitig über einen eine Induktivität (L2) und einen piezoelektrischen Übertrager (14) aufweisenden Schwingkreis (6) und eine sekundärseitige Gleichrichterschaltung (8) mit der Ansteuerschaltung elektrisch leitend verbunden ist, wobei diesem modifizierten Wechselrichter-Brückenzweig (4) ein Taktgenerator (10) mit einer Eigenenergieversorgung (12) zugeordnet ist, die eingangsseitig am Gleichspannungs-Zwischenkreis und ausgangsseitig mit dem Taktgenerator (10) verbunden ist. Somit erhält man eine potentialfreie Energieversorgung für Ansteuerschaltungen für Leistungshalbleiterschalter einer Stromrichterschaltung, deren Baugröße und Gewicht gegenüber einer induktiven Energieübertragung wesentlich kleiner ist und die direkt am Gleichspannungs-Zwischenkreis der Stromrichterschaltung angeschlossen werden kann.

## Beschreibung

Die Erfindung bezieht sich auf einen DC-DC-Wandler zur potentialfreien Energieversorgung einer Ansteuerschaltung eines Leistungshalbleiterschalters einer Stromrichterschaltung aus deren Gleichspannungs-Zwischenkreis.

Hinsichtlich der Ansteuerung können zwei Klassen von Halbleiterventilen unterschieden werden.

Die erste Klasse sei durch Halbleiterventile gekennzeichnet, die entweder zur Aufrechterhaltung des Laststromes (Bipolartransistor) oder zur Änderung von Schaltzuständen (Thyristoren, abschaltbare Thyristoren (GTO)) eine elektrische Leistung am Steueranschluß von einigen bis mehreren 10 W benötigen.

Die zweite Klasse von Elementen sei durch ein kapazitives Verhalten (MOSFET, IGBT) am Steueranschluß charakterisiert. Zur Änderung von Schaltzuständen muß eine Ladung in den Steueranschluß hinein- oder aus ihm herausgeführt werden. Dieses kann, ideale Verhältnisse vorausgesetzt, leistungslos durch quasiresonante Ansteuerschaltungen realisiert werden. Bei resistiver Zuführung der Ladung entstehen der Frequenz und der Stromtragfähigkeit der verwendeten Halbleiter proportionale Verluste. Diese entstehen nicht im Halbleiter, sondern in der Ansteuerschaltung. Für einen 300 A/1200 V IGBT bei einer Taktfrequenz von 10 kHz wird mit einem Leistungsbedarf von ca. 1 W gerechnet.

Anhand einer in der Leistungselektronik typischen Halbleiterventil-Konfiguration, beispielsweise ein Brückenzweig einer Stromrichterschaltung, werden die Anforderungen an die Ansteuerschaltung sowie deren Energieversorgung hergeleitet. Ein herkömmlicher Stromrichter-Brückenzweig, wie er zum Wechselrichten einer durch einen Zwischenkreis, gebildet durch zwei Kondensatoren, hinzugefügten Gleichspannung verwendet werden kann, weist zwei Stromrichterventile auf, beispielsweise feldgesteuerte Stromrichterventile wie MOS-Feldeffekttransistoren oder Insulated-Gate-Bipolar-Transistoren. Bei Gleichrichtung eines dreiphasigen Versorgungsnetzes beträgt die Gleichspannung beispielsweise 560 V. Die Ausgangsspannung dieses Stromrichter-Brückenzweiges variiert je nach Schaltzustand der feldgesteuerten Stromrichterventile zwischen plus und minus der halben Gleichspannung. Jedes Stromrichterventil ist über seinen Steuereingang mit einer Ansteuerschaltung versehen, die jeweils mit einer Energieversorgung verknüpft ist.

Das Bezugspotential der unteren Ansteuerschaltung dieses Stromrichter-Brückenzweiges ist das Emitter-Potential des zu steuernden Stromrichterventils. Dieses Bezugspotential ist unabhängig vom Schaltzustand der Stromrichterventile dieses Stromrichter-Brückenzweiges. Das Bezugspotential der das obere Stromrichterventil ansteuernden Ansteuerschaltung hingegen springt. Deshalb muß eine diesen oberen Zweig versorgende Spannungsquelle galvanisch getrennt zu allen Schaltungspunkten realisiert werden. Mögliche kapazitive sowie induktive Verkopplungen müssen zur Vermeidung von Fehlfunktionen durch Ausgleichströme bei den durch Einsatz von schnellen Halbleiterventilen üblichen Strom- und Spannungssteilheiten weitgehend vermieden werden.

Üblicherweise werden in der Elektrotechnik zur Realisierung potentialfreier Energieversorgungen induktiv gekoppelte Stromkreise benutzt. Gängige Schaltungskonzepte dieser Art sind z.B. der Sperr- sowie der Durchflußwandler, deren Vor- und Nachteile aus der einschlägigen Literatur bekannt sind.

Eine weitere Möglichkeit des Energietransportes ist durch den Einsatz einer Kombination aus Halbleiterlaser, Lichtwellenleiter und photovoltaischem Element gegeben. Derartige Systeme sind auf dem Markt erhältlich. Die sekundäre Ausgangsleistung ist auf ca. 1 W begrenzt. Der erhebliche technische Aufwand, verbunden mit einem Preis von mehreren Tausend DM als auch die begrenzte Lebensdauer (Degradation) des Halbleiterlasers, machen den Einsatz nur in Sonderfällen sinnvoll. Dieses ist z.B. für Sensoren in der Hochspannungstechnik gegeben.

Nicht nur elektromagnetische Wellen, sondern auch mechanische Schwingungen bieten die Möglichkeit, Energie zu übertragen. Dazu müssen ein motorisches, also die mechanische Schwingung erzeugendes Element sowie ein generatorisches, d.h., ein in elektrische Energie rückwandelndes Element vorhanden sein. Für piezoelektrische Übertrager können Bleizirkonattitanat-Keramiken (PZT-Keramik) verwendet werden. Das Anlegen eines elektrischen Feldes an die Keramik führt zu mechanischen Deformationen.

Ein derartiger piezoelektrischer Übertrager ist in dem deutschen Gebrauchsmuster 295 10 901 näher beschrieben, so daß an dieser Stelle auf eine Beschreibung eines piezoelektrischen Übertragers verzichtet werden kann.

Der Erfindung liegt nun die Aufgabe zugrunde, einen Wandler zur potentialfreien Energieversorgung einer Ansteuerschaltung eines Leistungshalbleiterschalters anzugeben, der die eingangs genannten Nachteile nicht aufweist.

Diese Aufgabe wird erfindungsgemäß gelöst durch die Merkmale des Anspruchs 1.

Dieser durch die Merkmale des Anspruchs 1 gekennzeichnete Wandler ist ein DC-DC-Wandler, der als modifizierter Schwingkreiswechselrichter ausgeführt ist und direkt aus einem Spannungs-Zwischenkreis einer Stromrichterschaltung gespeist werden kann. Dieser DC-DC-Wandler weist folgende Komponenten auf:
- Eingangsfilter zur Unterdrückung kurzzeitiger Spannungsspitzen
- modifizierter Brückenzweig zum Wechselrichten der Eingangsgleichspannung
- Schwingkreis, bestehend aus einer strombegrenzenden Induktivität und einem piezoelektrischen Übertrager
- Taktgenerator zur Ansteuerung eines Halbleiterschalters des modifizierten Brückenzweiges
- sekundärer Ausgangskreis zur Gleichrichtung und Spannungsstabilisierung und
- Eigenenergieversorgung zur Speisung des Taktgenerators.

Durch diese erfindungsgemäße Ausgestaltung des DC-DC-Wandlers ist die sich ergebende Baugröße und das Gewicht geringer als die, die bei induktiver Übertragung zu erwarten ist, wodurch sich eine vorteilhafte Montage des DC-DC-Wandlers ergibt. Außerdem kann durch Wahl der mechanischen Ausführung des piezoelektrischen Übertragers die Isolierspannung maximal und die kapazitive Verkopplung minimal werden.

Der Betrieb dieses erfindungsgemäßen DC-DC-Wandlers gliedert sich in eine Startphase, eine Anlaufphase und eine stationäre Phase und wird später noch ausführlich beschrieben.

Bei einer vorteilhaften Ausführungsform des DC-DC-Wandlers ist der Taktgenerator mittels eines Rückkopplungsnetzwerkes mit dem Schwingkreis gekoppelt. Mittels dieses Rückkopplungsnetzwerkes wird in Abhängigkeit der Phasenlage der Spannung am piezoelektrischen Übertrager eine zusätzliche Ladung in den Kondensator des zeitbestimmenden Gliedes des Taktgenerators eingespeist. Durch diese zusätzliche Ladung bzw. diesen Strom wird die Frequenz des Taktgenerators herabgesetzt. Ändert sich die Resonanzfrequenz und somit die Phasenlage der Spannung des piezoelektrischen Übertragers, so wird die Taktfrequenz des Taktgenerators mitgezogen. Das Mitziehen des Taktgenerators wird somit nur von der Phasenlage der Spannung des piezoelektrischen Übertragers abhängig.

Bei einer weiteren vorteilhaften Ausführungsform ist die Eigenenergieversorgung eingangsseitig mit dem Ausgang des Eingangsfilters verbunden. Somit gelangen keine kurzzeitigen Spannungsspitzen zum Taktgenerator, der von der Eigenenergieversorgung gespeist wird.

In den Unteransprüchen 4 bis 11 sind vorteilhafte Ausführungsformen der Komponenten des DC-DC-Wandlers näher angegeben.

Zur weiteren Erläuterung der Erfindung wird auf die Zeichnung Bezug genommen, in der zwei Ausführungsbeispiele eines DC-DC-Wandlers gemäß der Erfindung schematisch veranschaulicht sind.
- Figur 1: zeigt eine erste Ausführungsform eines DC-DC-Wandlers gemäß der Erfindung, wogegen in der
- Figur 2: eine vorteilhafte Ausführungsform eines DC-DC-Wandlers gemäß der Erfindung dargestellt ist, in der
- Figur 3: ist das Verhalten des modifizierten Wechselrichter-Brückenzweiges des DC-DC-Wandlers während der Startphase und in
- Figur 4: während der stationären Phase veranschaulicht, die
- Figur 5: zeigt die Verläufe von Spannungen und Strömen am piezoelektrischen Übertrager des DC-DC-Wandlers und in der
- Figur 6: sind die Verläufe von Spannungen und Strömen im Rückkopplungsnetzwerk des DC-DC-Wandlers nach Figur 2 dargestellt.

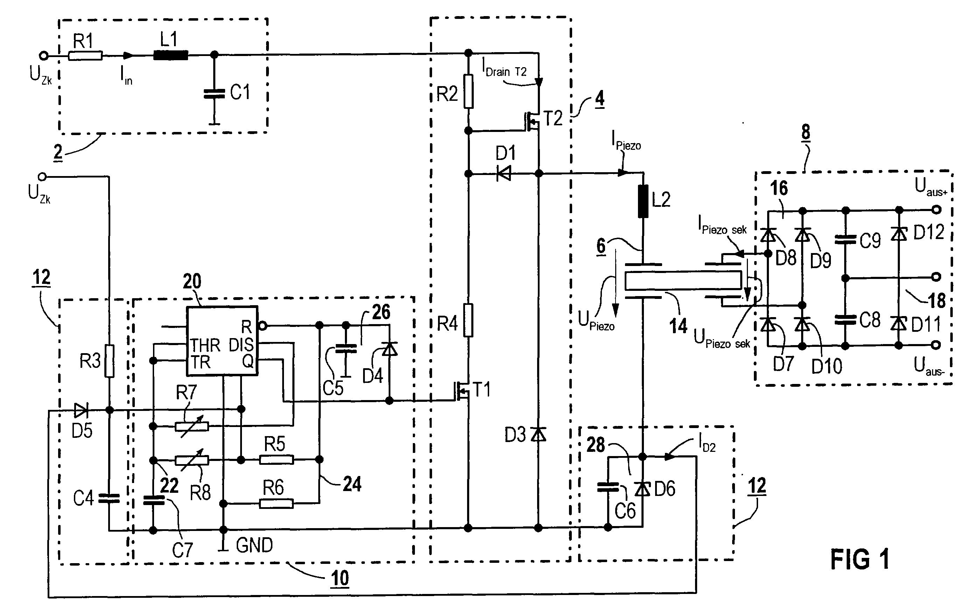

Die Figur 1 zeigt eine Schaltskizze einer ersten Ausführungsform eines DC-DC-Wandlers gemäß der Erfindung. Ein derartiger DC-DC-Wandler wird zur potentialfreien Energieversorgung einer Ansteuerschaltung eines Leistungshalbleiterschalters einer Stromrichterschaltung, beispielsweise eines dreiphasigen Pulswechselrichters, verwendet. Als Eingangsspannung dieses DC-DC-Wandlers dient eine Zwischenkreisspannung U_{Zk}, beispielsweise 560 V, eines Wechselrichters. Die Ausgangsspannung Uₐᵤₛ₊ und Uₐᵤₛ₋, beispielsweise +15 V und -5 V, ist potentialfrei und geregelt. Die Ausgangsleistung beträgt in Abhängigkeit von der Eingangsspannung ca. 1 W. Dadurch, daß dieser DC-DC-Wandler als modifizierter Reihenschwingkreis-Wechselrichter ausgeführt ist, besteht die Möglichkeit der Miniaturisierung dieser Schaltung auf wenige Kubikzentimeter.

Dieser DC-DC-Wandler besteht aus den Komponenten:
- Eingangsfilter 2
- modifizierter Wechselrichter-Brückenzweig 4
- Schwingkreis 6
- sekundärseitige Gleichrichterschaltung 8
- Taktgenerator 10 und
- Eigenenergieversorgung 12

Das Eingangsfilter 2 weist einen Widerstand R1, eine Induktivität L1 und einen Kondensator C1 auf. Diese Elemente R1, L1 und C1 sind als Tiefpaßfilter miteinander verknüpft. Aufgabe dieses Eingangsfilters 2 ist es, Spannungsspitzen des Gleichspannungs-Zwischenkreises, hervorgerufen durch parasitäre Induktivitäten in den Brückenzweigen des Pulswechselrichters, zu begrenzen.

Der modifizierte Wechselrichter-Brückenzweig 4 weist zwei MOS-Transistoren T1 und T2, zwei Dioden D1 und D3 und zwei Widerstände R2 und R4 auf. Der obere MOS-Transistor T2 ist mit seinem Drain-Anschluß einerseits mit dem Ausgang des Eingangsfilters 2 und andererseits über den Widerstand R2 mit seinem Steueranschluß verbunden. Der Source-Anschluß des oberen MOS-Transistors T2 ist einerseits mittels der Diode D1 mit seinem Steueranschluß gekoppelt und andererseits mittels der Diode D3 vom Bezugspotential GND entkoppelt. Der untere MOS-Transistor T1 ist mit seinem Drain-Anschluß mittels des Widerstandes R4 mit dem Steueranschluß des oberen MOS-Transistors T2 verbunden. Der Source-Anschluß dieses unteren MOS-Transistors T1 ist mit dem Bezugspotential GND, wogegen sein Steueranschluß mit einem Ausgang Q des Taktgenerators 10 verknüpft ist. Dieser modifizierte Wechselrichter-Brückenzweig 4 erzeugt die für den Schwingkreis 6 notwendige Wechselspannung. Auffällig ist, daß der obere MOS-Transistor T2 keine eigene Ansteuerschaltung besitzt. Dieser wird mit Einschalten der Versorgungsspannung durch den Widerstand R2 durchgeschaltet. Als MOS-Transistoren T1 und T2 können **MOS**-**F**eld**e**ffekt-**T**ransistoren (MOSFETs) wie dargestellt oder auch **I**nsulated-**G**ate-**B**ipolar-**T**ransistoren (IGBTs) verwendet werden. Der Einsatz von IGBTs führt aber aufgrund des bipolaren Schaltverhaltens zu größeren Verlusten.

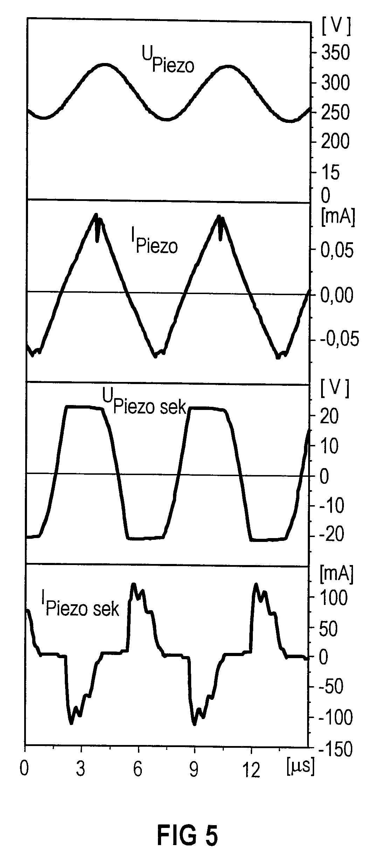

Der Schwingkreis 6, ein Reihenschwingkreis, weist eine Induktivität L2 und einen piezoelektrischen Übertrager 14 auf. Das Verhalten des sich mit der Induktivität L2 und der Metallisierungs-Kapazität C_{b} ausbildenden Schwingkreises 6 ist bei der Betriebsfrequenz von ca. 150 kHz stark induktiv. Erreicht die Betriebsfrequenz die Frequenz, bei der maximale Leistungsübertragung eintritt (Resonanzfrequenz des piezoelektrischen Übertragers 14), so wirkt die Induktivität L2 zusammen mit dem Brückenzweig 4 wie eine auf einem Parallelschwingkreis arbeitende Stromquelle. Die am Übertrager 14 anstehende Spannung U_{Piezo} wird maximal und die Leistungsübertragung erreicht ihren Höchstwert. Die Figur 5 veranschaulicht die primärseitigen und sekundärseitigen Spannungen und Ströme des piezoelektrischen Übertragers.

Die sekundärseitige Gleichrichterschaltung 8 weist einen Brückengleichrichter 16 mit den Dioden D7 bis D10, zwei Siebkondensatoren C8 und C9 und eine Spannungsstabilisierung 18 auf. Diese Spannungsstabilisierung 18 ist ein Parallelregler, der entweder durch passive Z-Dioden D10 und D11, wie dargestellt, oder durch ein aktives Element, beispielsweise TL430C realisisiert wird. Als Dioden D7 bis D10 des Brückengleichrichters 16 werden schnelle Dioden, beispielsweise Schottky-Dioden, verwendet. Die auf der sekundären Seite des piezoelektrischen Übertragers 14 erzeugten Ladungen werden über den Brückengleichrichter 16 den Siebkondensatoren C8 und C9 zugeführt. Durch Wahl des Parallelreglers können Ausgangsspannungen von 0 V bis zur maximalen Leerlaufspannung eingestellt werden.

Der Taktgenerator 10 weist einen Taktoszillator 20, ein zeitbestimmendes Glied 22, einen Spannungsteiler 24 und eine Spannungserhaltungs-Schaltung 26 auf. Der Taktoszillator 20 besteht im wesentlichen aus zwei Komparatoren und einem Flip-Flop. Das zeitbestimmende Glied 22 ist aus einem externen RC-Kreis mit den Elementen C7, R7, R8 gebildet. Der Spannungsteiler 24 weist die Widerstände R5 und R6 auf. Die Spannungserhaltungs-Schaltung 26 besteht aus einem gegen das Bezugspotential GND geschalteten Kondensator C5 und einer Diode D4, die anodenseitig mit dem Ausgang Q des Taktoszillators 20 bzw. des Taktgenerators 10 verbunden ist. Kathodenseitig ist diese Diode D4 mit einem Anschluß des Kondensators C5 und mit einem Resetanschluß R des Taktoszillators 20 verbunden. Der Spannungsteiler 24 ist eingangsseitig mit der Eigenenergieversorgung 12 und ausgangsseitig mit dem Resetanschluß R des Taktoszillators 20 verbunden. Der Kondensator C7 des zeitbestimmenden Gliedes 22 wird über den Widerstand R8 von der Eigenenergieversorgung 12 aufgeladen. Erreicht die Spannung am Kondensator C7 einen Wert von beispielsweise 2/3 der Ausgangsspannung der Eigenenergieversorgung 12, so wird der Q-Ausgang des Taktoszillators 20 auf "Low" gesetzt. Dadurch wird der Kondensator C7 im folgenden Zeitraum über den Widerstand R7 entladen. Die Spannung am Kondensator C7 des zeitbestimmenden Gliedes 22 sinkt bis auf einen Wert von beispielsweise 1/3 der Ausgangsspannung der Eigenenergieversorgung 12 ab. Mit Erreichen dieses Wertes schaltet der Q-Ausgang des Taktoszillators 20 auf "High" um und die Entladephase ist beendet, d.h., der Kondensator C7 wird wieder über den Widerstand R8 aufgeladen.

Die zum Betrieb des Taktoszillators 20 und zum Ansteuern des unteren MOS-Transistors T1 des modifizierten Wechselrichter-Brückenzweiges 4 benötigte Energie wird von der Eigenenergieversorgung 12 zur Verfügung gestellt. Diese Eigenenergieversorgung 12 weist eine Ladungserhaltungs-Schaltung 28 und einen Kondensator C4 auf. Der Kondensator C4 ist einerseits über einen Widerstand R3 mit dem Gleichspannungs-Zwischenkreis eines Pulswechselrichters und andererseits mittels einer Entkopplungsdiode D5 mit dem Ausgang der Ladungserhaltungs-Schaltung 28 verbunden. Ein positiver Strom i_{Piezo} verursacht an der Z-Diode D6 der Ladungserhaltungs-Schaltung 28 einen Spannungsabfall, der über die Entkopplungsdiode D5 die Ladungserhaltung des Kondensators C4 garantiert. Parallel zur Z-Diode D6 ist ein Kondensator C6 geschaltet. Der Kondensator C4 wird erstmalig durch das Einschalten der Versorgungsspannung U_{Zk} über den Widerstand R3 aufgeladen. Ein negativer Strom i_{Piezo} wird durch die Entkopplungsdiode D5 vom Kondensator C4 ferngehalten.

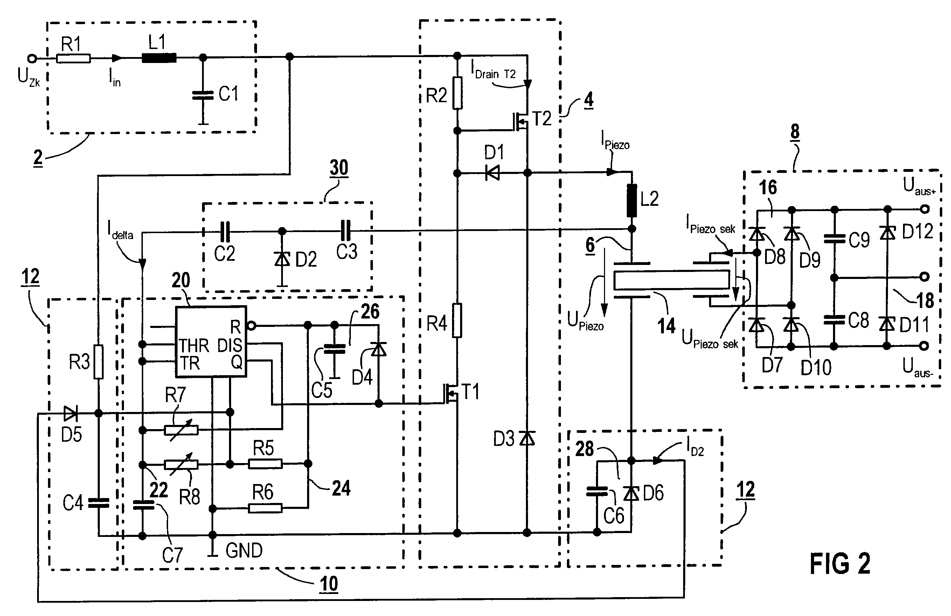

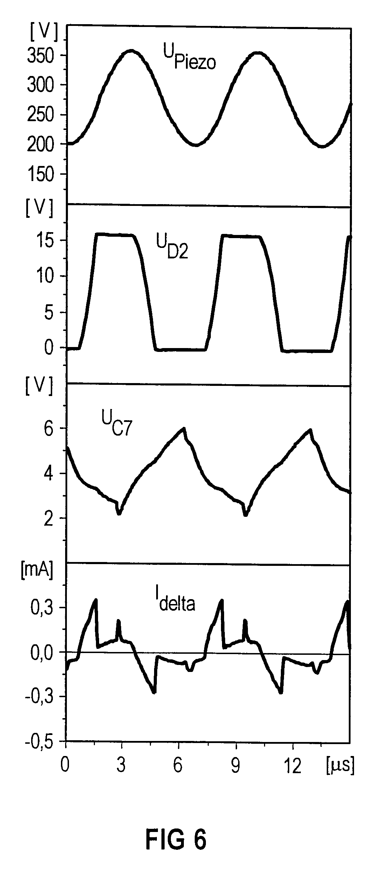

In der Figur 2 ist eine vorteilhafte Ausführungsform des DC-DC-Wandlers nach Figur 1 dargestellt. Diese vorteilhafte Ausführungsform unterscheidet sich von der Ausführungsform gemäß Figur 1 dadurch, daß die Eigenenergieversorgung 12 anstatt an einem Gleichspannungs-Zwischenkreis eines Pulswechselrichters an den Ausgang des Eingangsfilters 2 angeschlossen ist und daß ein Rückkopplungsnetzwerk 30 vorgesehen ist. Dieses Rückkopplungsnetzwerk 30 weist zwei Kondensatoren C2 und C3 und eine Z-Diode D2 auf. Eingangsseitig ist dieses Rückkopplungsnetzwerk 30 mittels des Kondensators C3 mit dem Schwingkreis 6 und ausgangsseitig mittels des Kondensators C2 mit dem Taktgenerator 10 gekoppelt. Die über den Kondensator C3 ausgekoppelte Spannung U_{Piezo} wird mittels der Z-Diode D2, die zwischen dem Verbindungspunkt der beiden Kondensatoren C2 und C3 und dem Bezugspotential GND geschaltet ist, amplitudenbegrenzt. Anstelle dieser Z-Diode D2 kann auch ein amplitudengeregelter Verstärker eingesetzt werden. Der Spannungsverlauf der Z-Diode D2 ist in der Figur 6 näher dargestellt. Mittels dieses Rückkopplungsnetzwerkes 30 wird eine zusätzliche Ladung in Abhängigkeit der Phasenlage der Spannung U_{Piezo} in die Kapazität C7 des zeitbestimmenden Gliedes 22 des Taktoszillators 20 eingespeist. Der Spannungsverlauf U_{C7} am Kondensator C7 des zeitbestimmenden Gliedes 22 des Taktoszillators 20 ist ebenfalls in der Figur 6 näher dargestellt.

Befindet sich die Frequenz des Taktoszillators 20 oberhalb der Frequenz, bei der maximale Leistungsübertragung eintritt (Resonanzfrequenz des piezoelektrischen Übertragers 14), so wirkt der Strom I_{delta}, dargestellt in der Figur 6, dem durch die Widerstände R7 und R8 eingeprägten Strom entgegen, so daß die Frequenz des Taktoszillators 20 herabgesetzt wird. Ändert sich die Resonanzfrequenz des piezoelektrischen Übertragers 14 aufgrund geänderter sekundärer Belastung, und somit die Phasenlage der Spannung U_{Piezo}, dargestellt ebenfalls in der Figur 6, in bezug auf den durch die Induktivität L2 vorgegebenen Strom I_{Piezo}, so wird der Taktoszillator 20 mitgezogen.

Die Anforderungen an den Taktoszillator 20 bezüglich der Frequenz- und Temperaturstabilität sind hoch, da der Ziehbereich des Oszillators 20 beschränkt ist. Ferner muß das Einrasten des durch das Rückkopplungsnetzwerk 30 mitgezogenen Oszillators 20 sichergestellt werden. Bauelementen mit definiertem Temperaturkoeffizienten sind im Bereich des Oszillators 20 zwingend erforderlich. Der Temperaturgang des Taktoszillators 20 kann durch Verwendung eines keramischen Scheibenkondensators des Werkstoffes N750 für den Kondensator C7 kompensiert werden. Die mögliche Bautoleranz der die Frequenz bestimmenden Elemente C7, R7, R8 sollte 1 % nicht überschreiten. Ein Einzelabgleich kann, je nach Anforderung an den DC-DC-Wandler, notwendig sein.

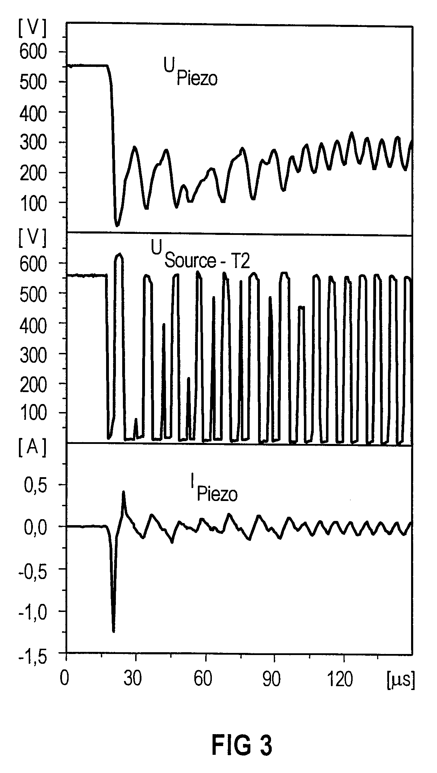

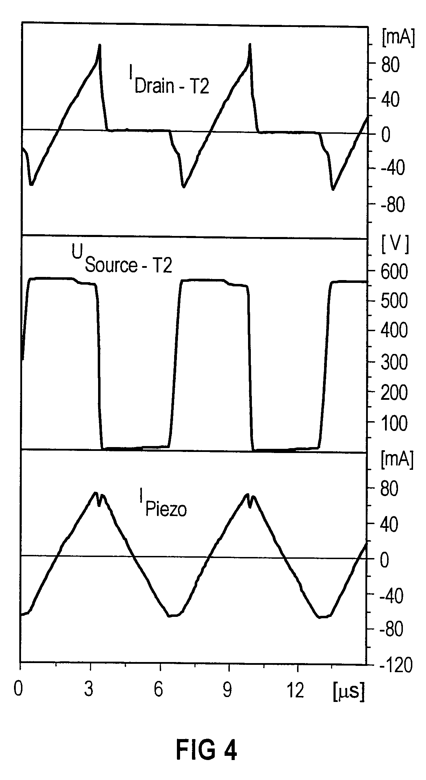

Anhand der in den Figuren 3 und 4 dargestellten Signalverläufe soll der Betrieb des DC-DC-Wandlers näher erläutert werden. Wie eingangs schon erwähnt, unterteilt sich der Betrieb des DC-DC-Wandlers in eine Startphase, eine Anlaufphase und eine stationäre Phase.

### Startphase

Mit Anlegen der Versorgungsspannung U_{Zk} wird der MOS-Transistor T2 über den Widerstand R2 durchgesteuert. Die primäre Metallisierungskapazität des piezoelektrischen Übertragers 14 lädt sich auf den Wert der Versorgungsspannung U_{Zk} auf. Etwa 100 ms später erreicht die Spannung am Kondensator C4 einen Wert von ca. 5 V. Der Mittelpunkt des durch die Widerstände R5 und R6 gebildeten Spannungsteilers 24 erreicht eine Spannung von ca. 1 V. Die Taktunterdrückung, hervorgerufen durch den Low-aktiven Resetanschluß R des Taktoszillators 20 wird aufgehoben. Der erste positive Impuls wird am Q-Ausgang des Taktoszillators 20 erzeugt und lädt über die Diode D4 den Kondensator C5 der Spannungserhaltungs-Schaltung 26 auf. Dadurch wird eine erneute, durch eine mögliche Spannungsabsenkung am Kondensator C4 hervorgerufene Unterdrückung verhindert. Zum gleichen Zeitpunkt wird der untere Transistor T1 durchgesteuert. Über den Widerstand R4 wird der Steueranschluß des oberen MOS-Transistors T2 entladen, so daß dieser abschaltet. Daraufhin wird der Strom -I_{Piezo} aus der Metallisierungskapazität über die Induktivität L2 und die Diode D1 hervorgerufen. Die an der Induktivität L2 anliegende Spannung bzw. die anliegende Spannungszeitfläche sättigt für diesen ersten Impuls die Induktivität L2, so daß der Strom I_{Piezo} auf ein Vielfaches seines stationären Wertes steigt (Figur 3). Dieses parasitäre Verhalten ist durch die benutzte Induktivität L2 gegeben, es stört jedoch nicht den regulären Betrieb. Mit dem Ende des ersten Taktes schaltet der MOS-Transistor T1 aus. Der durch die Induktivität L2 geführte Strom I_{Piezo} kommutiert in die durch den MOS-Transistor T2 gebildete Freilaufdiode. Ein erneutes Takten des MOS-Transistors T1 beendet die Startphase.

### Anlaufphase

Es folgt die Anlaufphase, die dadurch gekennzeichnet ist, daß die Kommutierungsvorgänge denen der stationären Phase gleichen. Die Frequenz sowie auch die Spannungsverhältnisse sind jedoch verschieden. Die Figur 3 verdeutlicht die Anlaufphase. Nachdem die Spannung U_{Piezo} fast vollständig zusammengebrochen ist, schwingt sie nach wenigen Taktzyklen um den Wert der halben Versorgungsspannung U_{Zk}.

### Stationäre Phase

Im stationären Zustand (Figur 4) kommutiert nach Abschalten des MOS-Transistors T1 der durch die Induktivität L2 geführte Strom I_{Piezo} in den oberen Freilaufzweig. Die an der Induktivität L2 anliegende Spannung wirkt dem Stromfluß entgegen, so daß dieser abnimmt. Der Strom I_{Piezo} erreicht seinen Nulldurchgang. Aufgrund der noch nicht vorhandenen Sperrfähigkeit der Diode, sie ist mit Ladungsträgern überflutet, baut er sich in entgegengesetzter Richtung wieder auf. Dieses gemeinhin parasitäre Verhalten wird Sperrverzug der Diode genannt und ist ein wesentliches Merkmal der Schaltung. Nach Ablauf der Sperrverzugszeit (einige 100 ns) unterbricht die Diode den Stromfluß. Die Sperrverzugszeit ist im wesentlichen abhängig von der Strombelastbarkeit des verwendeten MOS-Transistors T1. Der Strom I_{Piezo} wird jedoch durch die Induktivivät L2 geführt, so daß das Source-Potential des MOS-Transistors T2 sinken muß. Durch die im allgemeinen parasitäre, in dieser Anwendung jedoch gezielt ausgenutzte Gate-Drain-Kapazität C_{GD} (Rückwirkungskapazität) fließt daraufhin ein Strom in das Gate des MOS-Transistors T2. D ieser, aber auch der durch den Widerstand R2 zugeführte, lädt das Gate auf, so daß die steigende Gate-Source-Spannung den MOS-Transistor T2 leicht durchsteuert und dem sinkenden Source-Potential entgegenwirkt. Der MOS-Transistor T2 führt den Strom I_{Piezo}. Der am MOS-Transistor T2 entstehende Spannungsabfall, wenige 10 V, führt aufgrund der kurzen Leitphase und des geringen Stromes nicht zu nennenswerten Verlusten. Diese unkonventionelle Art des Einschaltens des oberen MOS-Transistors T2 des modifizierten Wechselrichter-Brückenzweiges 14 erspart den sonst üblichen Impulsübertrager und zeigt trotz Ausnutzung zweier parasitärer Effekte sichere Betriebseigenschaften.

Das erneute Einschalten des MOS-Transistors T1 bewirkt das Abschalten des MOS-Transistors T2. Dieser Schaltvorgang ist im Gegensatz zum sanften, quasi spannungslosen Einschalten des MOS-Transistors T2 ein harter Kommutierungsvorgang. Dieser könnte aufgrund der nicht vorhandenen Schaltlücke der Transistoren T1 und T2 einen Querstrom hervorrufen. Ein Querstrom tritt aber aus den folgenden Gründen nicht auf:
1. Der MOS-Transistor T2 ist nur leicht durchgesteuert, so daß das Entladen der Gate-Source-Kapazität schnell stattfindet.
2. Der abkommutierende Laststrom ist gering.
3. Der MOS-Transistor T2 ist ein unipolares Bauelement, so daß Schaltvorgänge sehr schnell erfolgen. Wie schon erwähnt, ist der Einsatz von IGBTs möglich, führt aber aufgrund des bipolaren Schaltverhaltens zu größeren Verlusten.

Der in Figur 4 dargestellte Strom I_{Drain-T2} bildet die eine Hälfte des dreieckförmigen Stromes I_{Piezo}. Der negative Anteil des Stromes I_{Drain-T2} fließt durch die Substratdiode des MOS-Transistors T2. Der positive Anteil wird anfangs von der Substratdiode geführt, nach Ablauf der Sperrverzugszeit durch den MOS-Transistor. Das Verhalten des sich mit der Induktivität L2 und der primären Metallisierungskapazität des piezoelektrischen Übertragers 14 ausbildenden Schwingkreises ist bei der Betriebsfrequenz von ca. 150 kHz stark induktiv. Erreicht die Betriebsfrequenz aufgrund des Rückkopplungsnetzwerkes 30 die Frequenz, bei der maximale Leistungsübertragung am piezoelektrischen Übertrager 14 erreicht wird, so wirkt die Induktivität L2 zusammen mit dem Brückenzweig 4 wie eine auf einen Parallelschwingkreis arbeitende Stromquelle mit dreieckförmigem Stromverlauf. Die am Übertrager anliegende Spannung U_{Piezo} (Figur 5) ist aufgrund der Filterwirkung annähernd sinusförmig und erreicht ihren Maximalwert. Die Ströme und Spannungen am Übertrager befinden sich in Phase.

Durch die Ausgestaltung des erfindungsgemäßen DC-DC-Wandlers erhält man eine potentialfreie Energieversorgung für Ansteuerschaltungen für Leistungshalbleiterschalter einer Stromrichterschaltung, deren Baugröße und Gewicht gegenüber einer induktiven Energieübertragung wesenltich kleiner ist und die direkt am Gleichspannungs-Zwischenkreis der Stromrichterschaltung angeschlossen werden kann.

## Patentansprüche

1. DC-DC-Wandler zur potentialfreien Energieversorgung einer Ansteuerschaltung eines Leistungshalbleiterschalters einer Stromrichterschaltung aus deren Gleichspannungs-Zwischenkreis, mit einem modifizierten Wechselrichter-Brückenzweig (4), der eingangsseitig über einen Eingangsfilter (2) mit dem Gleichspannungs-Zwischenkreis und ausgangsseitig über einen eine Induktivität (L2) und einen piezoelektrischen Übertrager (14) aufweisenden Schwingkreis (6) und einer sekundärseitigen Gleichrichterschaltung (8) mit der Ansteuerschaltung elektrisch leitend verbunden ist, wobei diesem modifizierten Wechselrichter-Brückenzweig (4) ein Taktgenerator (10) mit einer Eigenenergieversorgung (12) zugeordnet ist, die eingangsseitig am Gleichspannungs-Zwischenkreis und ausgangsseitig mit dem Taktgenerator (10) verbunden ist.

2. DC-DC-Wandler nach Anspruch 1, wobei der Taktgenerator (10) mittels eines Rückkopplungsnetzwerkes (30) mit dem Schwingkreis (6) gekoppelt ist.

3. DC-DC-Wandler nach Anspruch 1, wobei die Eigenenergieversorgung (12) eingangsseitig mit dem Ausgang des Eingangsfilters (2) verbunden ist.

4. DC-DC-Wandler nach Anspruch 1, wobei der modifizierte Wechselrichter-Brückenzweig (4) zwei MOS-Transistoren (T1,T2) aufweist, wobei der Steueranschluß des oberen MOS-Transistors (T2) einerseits über einen Widerstand (R2) mit dem Eingang dieses modifizierten Wechselrichter-Brückenzweiges (4) und andererseits über einen weiteren Widerstand (R4) mit einem Drain-Anschluß des unteren MOS-Transistors (T1) verbunden ist, wobei der Reihenschaltung des unteren MOS-Transistors (T1) und des weiteren Widerstandes (R4) eine aus zwei Dioden (D1,D3) bestehende Reihenschaltung parallel geschaltet ist, wobei der Verknüpfungspunkt der beiden Dioden (D1,D3) einerseits mit dem Source-Anschluß des oberen MOS-Transistors (T2) verbunden ist und andererseits den Ausgang des modifizierten Wechselrichter-Brückenzweiges (4) bildet und wobei der Steueranschluß des unteren MOS-Transistors (T1) mit dem Ausgang (Q) des Taktgenerators (10) verbunden ist.

5. DC-DC-Wandler nach Anspruch 1, wobei die sekundärseitige Gleichrichterschaltung (8) einen Brückengleichrichter (16), zwei Siebkondensatoren (C8 und C9) und eine Spannungsstabilisierung (18) aufweist, wobei der Brückengleichrichter (16) eingangsseitig mit der Sekundärseite des piezoelektrischen Übertragers (14) des Schwingkreises (6) und ausgangsseitig über die Siebkondensatoren (C8, C9) mit der Spannungsstabilisierung (18) verknüpft ist, deren Ausgänge mit der Ansteuerschaltung verknüpft sind.

6. DC-DC-Wandler nach Anspruch 1, wobei der Taktgenerator (10) einen zwei Komparatoren und einen Flip-Flop aufweisenden Taktoszillator (20), ein zeitbestimmendes Glied (22), einen Spannungsteiler (24) und eine Spannungserhaltungs-Schaltung (26) aufweist, wobei der Spannungsteiler (24) eingangsseitig mit der Eigenenergieversorgung (12) und ausgangsseitig mit einem Resetanschluß (R) des Taktoszillators (20), an dem die Spannungserhaltungsschaltung (26) angeschlossen ist, verknüpft ist und wobei die Spannungserhaltungs-Schaltung (26) einen Kondensator (C5) und eine Diode (D4) aufweist, die anodenseitig mit dem Ausgang (Q) des Taktoszillators (20) und kathodenseitig mit einem Anschluß des Kondensators (C5) der mit dem Resetanschluß (R) des Taktoszillators (20) verknüpft ist, verbunden ist.

7. DC-DC-Wandler nach Anspruch 1, wobei die Eigenenergieversorgung (12) einen Kondensator (C4) und eine Ladungserhaltungs-Schaltung (28) aufweist, wobei der Kondensator (C4) mittels eines Ladewiderstandes (R3) mit dem Gleichspannungs-Zwischenkreis einer Stromrichterschaltung und mittels einer Entkopplungsdiode (D5) mit der Ladungserhaltungs-Schaltung (28) verbunden ist und wobei die Ladungserhaltungs-Schaltung (28) eine Z-Diode (D6) mit parallelem Kondensator (C6) aufweist, wobei diese Z-Diode (D6) einerseits elektrisch in Reihe mit dem Schwingkreis (6) geschaltet ist und andererseits mit der Anode der Entkopplungsdiode (D5) verbunden ist.

8. DC-DC-Wandler nach Anspruch 2, wobei das Rückkopplungsnetzwerk (30) zwei Kondensatoren (C2, C3) und eine Z-Diode (D2) aufweist, wobei die Kondensatoren (C2, C3) elektrisch in Reihe geschaltet sind und die Z-Diode (D2) zwischen Verbindungspunkt der beiden Kondensatoren (C2, C3) und dem Bezugspotential (GND) angeordnet ist.

9. DC-DC-Wandler nach Anspruch 1, wobei als Eingangsfilter (2) ein Tiefpaßfilter vorgesehen ist.

10. DC-DC-Wandler nach Anspruch 4, wobei als MOS-Transistor (T1, T2) ein MOS-Feldeffekttransistor vorgesehen ist.

11. DC-DC-Wandler nach Anspruch 4, wobei als MOS-Transistor (T1, T2) ein Insulated-Gate-Bipolar-Transistor vorgesehen ist.
